# EUROPEAN PATENT SPECIFICATION

(11) **EP 0 746 727 B1**
(45) Date of publication and mention of the grant of the patent: **28.08.2002**
(21) Application number: 95913777.9
(22) Date of filing: 15.03.1995
(51) Int. Cl.: F24D 3/14, F24D 3/12

(54) **FLOOR HEATING SYSTEM**
FUSSBODENHEIZUNGSANLAGE
SYSTEME DE CHAUFFAGE AU SOL

(30) Priority: 15.03.1994 US 212991
(43) Date of publication of application: 11.12.1996
(73) Proprietor: Alsberg, Terry Wayne, Capitola, CA 95010 (US)
(72) Inventor: Alsberg, Terry Wayne, Capitola, CA 95010 (US)
(74) Representative: Skone James, Robert Edmund
(86) International application number: US9503461
(87) International publication number: WO95025249

(56) References cited:
- US-A- 160 014
- US-A- 4 782 889
- US-A- 4 865 120
- US-A- 5 022 459
- US-A- 5 095 716
- US-A- 5 292 065

## Description

### BACKGROUND OF THE INVENTION

### 1. Field of Invention

This invention relates to hydronic or electric radiant panel heating or cooling systems.

### 2. Description of the Prior Art

Prior art in the concept of heating a space by heating the floor surface within the space goes back as far as the Roman Empire. Hydronic floor panel heating systems currently in use employ metal or plastic tubing embedded in a concrete slab or tubing with aluminum plates attached through various means. There are systems (for example, as distributed by the Wirsbo Company of Apple Valley, Minnesota) where, after a floor is constructed, the aluminum plates are attached underneath the plywood subfloor, between the floor joists. There have been systems were the aluminum plates and tubing are supported by light framing (see for example Shiroki, US patent number 4,865,120), grooved foam plastic sheets or grooved plywood (for example as distributed by Lagerstedt and Krantz AB of Sweden) placed above the subfloor and covered by an additional sheet of nailable material. There have been some foam plastic systems (for example as distributed by Wirsbo AB of Sweden) and some tile systems (See for example German patent number DE3411339A1 and Williams, US patent number 3,037,746) that utilize modular groove geometry to facilitate the layout of the arrays of tubing.

There have been a number of systems that are comprised of individual panels which contain tubing already embedded in the panels and which are then joined together to create a larger radiant panel array (see for example US-A-5292065, 2,681,796 and Japanese patent numbers 57-108531, 59-158919, 59-95321, 59-225228) which is placed upon a previously constructed subfloor system.

There is no evidence of systems where there is a combination of a structural subfloor panel, with a top surface comprised of a heat conductive sheet embossed with grooves laid out in a modular geometry, which implements the full range of features described herein. It is this unique combination of elements into a system which greatly simplifies the installation of radiant panel heating that distinguishes the present invention from the prior art.

All radiant panel heating systems have tended to provide superior comfort among other benefits and yet current systems have had mixed acceptance in part because of:
**(A) Excessive Cost.** Prior systems typically involve highly customized designs to fit each building design and as a result are largely site built. They often require additional structural design and cost due to the weight of the panels. Their installation is labor intensive and is accomplished by specialists. These systems disrupt the timing of the construction process and often interfere with the easy installation of finish floor materials.
**(B) Reliability.** In most current systems the tubing is concealed from the installers of finish floor materials and it is not unusual for a tube to be damaged by a fastener during this process. During a remodel, relocating interior walls also poses a great risk of tubing damage. When tubes are damaged the location of the damage may not be readily detected and the repairs often require substantial dismantling of the floor panels.
**(C) Response time.** Because of high thermal mass and/or high thermal resistance, current systems are typically slow to respond to changing heating loads with response times measured in hours or days.

### OBJECTIVES AND ADVANTAGES

Accordingly the objectives of this invention are to provide for:
(1) A modular geometry, subfloor system, installed using conventional construction methods, timing and skills, which in one step provides a structural subfloor and the basis of a heating system.
(2) Reduced dead weight for a radiant panel heating system which will reduce lateral and vertical loading of a building's structural systems.
(3) A system which allows for and therefore is largely independent of wall placement and application of finish floor materials, is not easily damaged either during the primary construction or any subsequent remodelling phase and which is more readily repaired if damaged.
(4) A reduction in response time to changing heating loads.
(5) In combination with all of the above objectives: a reduction in the cost of materials and labor along with an increase in user satisfaction sufficient to make the overall cost/benefit comparison of radiant panel heating to other heating systems, more favorable.

US-A-4565120 describes a floor structure in which the heating structure is designed to be placed on top of a rough floor which is disadvantageous. Similarly, US-A-5292065 describes a floor heating structure which is placed on a sub floor.

In accordance with a first aspect of the present invention, a thermal transfer system for a building storey comprises
a plurality of load-bearing panels, each panel composed of a structural material which can be sawn, nailed, screwed, or glued, each of the load-bearing panels having a grooved surface to which a heat conducting layer is adhered to form a thermally conductive surface and which substantially conforms to said grooved surface,

Said grooved surface of each of said load bearing panels positioned to abut said grooved surface of an adjacent load bearing panel,
the plurality of load-bearing panels being positioned together to form a subfloor that is substantially continuous for the story, and directly secured to joists, and the thermally conductive surfaces of the secured load-bearing panels provide a continuous pathway of grooves substantially throughout the subfloor,
said grooves opened at a top surface of the subfloor, for incorporating a thermal exchange means to form a substantially continuous, substantially planar, thermally conductive surface over substantially all of the subfloor.

In accordance with a second aspect of the present invention, a method for constructing a thermal exchange system for a building story of a structure including joists, from a plurality of load bearing panels, each panel composed of a structural material which can be sawn, nailed, screwed, or glued, each of said load-bearing panels having a grooved surface and a thermally conducting panel surface on which is formed a modular grooved pattern that substantially conforms to said grooved surface comprises
securing the plurality of load-bearing panels directly to the joists to form a subfloor that is substantially continuous for the story wherein the modular grooved surface of the plurality of load-bearing panels forms a continuous network of grooves substantially throughout a top surface of the subfloor and
depositing a thermal exchange means in the network of grooves after forming said subfloor and prior to and independent of erecting walls or partitions.

In a typical embodiment of the invention, the subflooring membrane of a building is constructed of special sub-floor panels made typically of plywood, oriented strand board or other structurally suitable material which like plywood is easily sawn, nailed, or glued in a manner consistent with prevalent practices in the construction industry. The sub-floor panels have been manufactured with a pattern of grooves formed into their surface; a heat conductive sheet has been embossed to match the pattern of the grooves; and this sheet has been bonded to the sub-floor panels.

After the panels are in place, an elastomeric compound is placed in the grooves and tubing is pressed into the grooves, following the pattern provided by the modular geometry. The compound holds the tubes in place: fills in any air voids between the tubing and the heat conductive surface and is trowelled flush with the top surface of the panels thereby providing a smooth surface to which finish floor materials are easily attached. The heat conducting surface is in direct contact with the finish floor covering and provides for a more rapid thermal response than conventional systems.

In one step, prior to walls being constructed, the structural subfloor and heating system is installed, thereby providing great cost savings. The clear visibility of the tubing paths makes damaged of the tubing while fastening walls and finish flooring materials to this subfloor, unlikely. In the event of damage, leaks are easily located and repairs are easily made.

The invention will be more fully comprehended from the following detailed description and accompanying drawings in which:
FIG. 1 is an isometric view of this invention utilized within a typical floor framing, subfloor and wall framing system.
FIG. 2 is a schematic top view of the modular assembly of the heating panels into an array which provides a continuous unjointed tubing path.
FIG. 3 is a top view of the grooves in a typical modular sub-floor panel used for the end tubing runs.
FIG. 4 is a top view of the grooves in a typical modular sub-floor panel used for straight tubing runs.
FIG. 5 is a cross section view of the assembled sub-floor panel, heat conductive surface and hydronic tubing.
FIG. 6 is a top view of the grooves in a single modular sub-floor panel which is an aggregate of the geometries depicted in Figs. 3&4.
FIG. 7 is a top view of the grooves in a group of related modular sub-floor panels, which are disaggregated from the geometries of Figs. 3&4.

### DETAILED DESCRIPTION

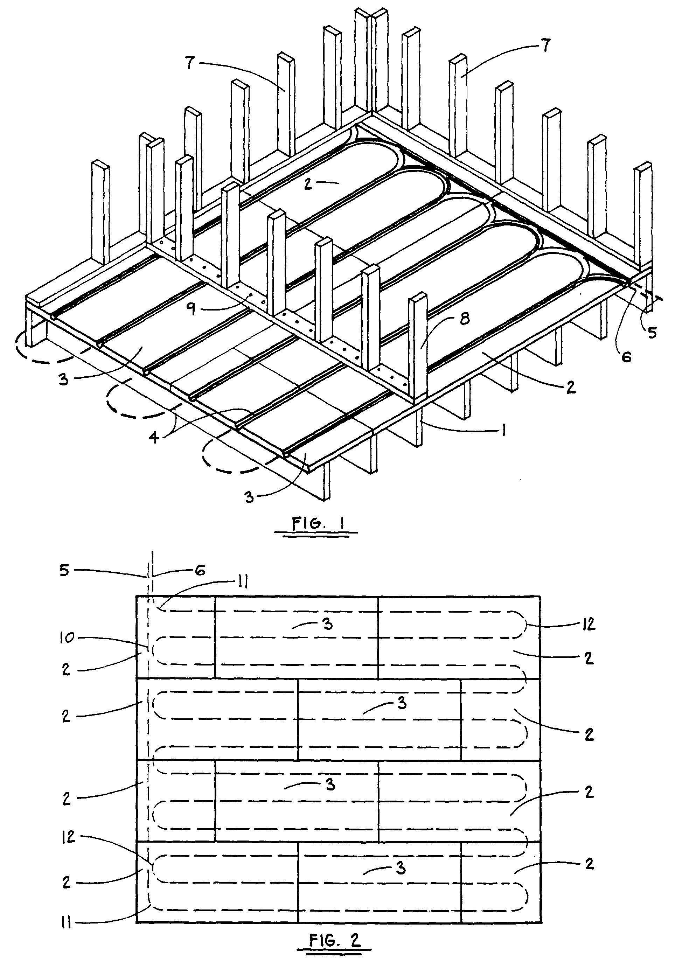

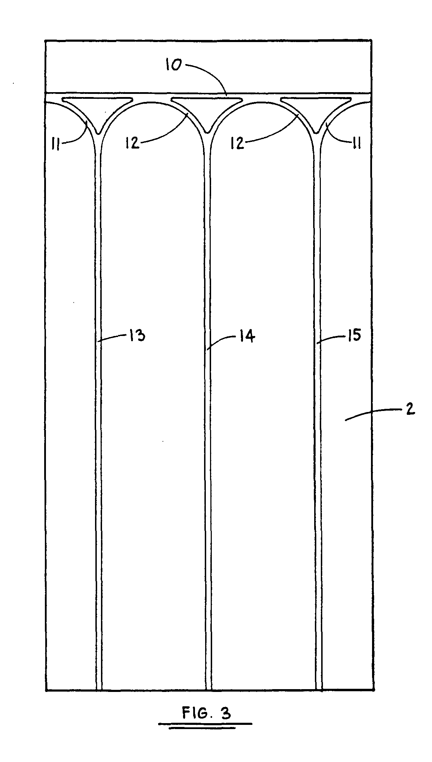

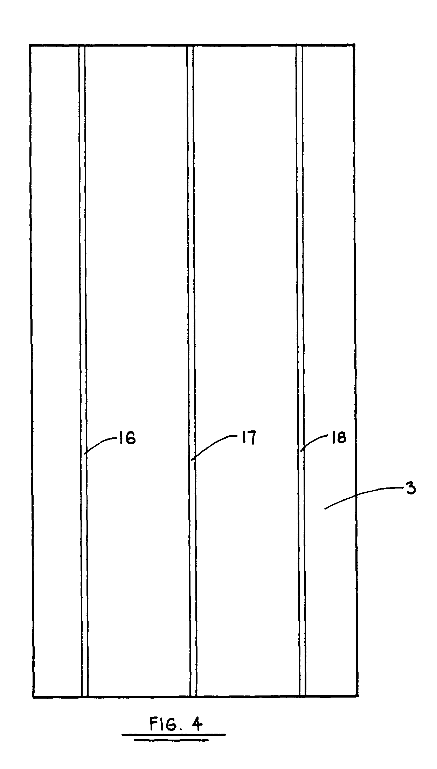

Referring now to Fig. 1, a typical application of the present invention within a floor framing system is depicted. Conventional floor joists **1** comprise the support system. Panels **2** (such as are depicted in Fig. 3) and **3** (such as are depicted in Fig. 4) are fastened to the floor joists in a manner typical of conventional subflooring membranes. A tube **4** of the type employed in radiant panel heating is pressed into the modular pathway of grooves.

In this example, the inlet is at **5** and the outlet is at **6**. The spacing of the grooves allows for exterior walls **7** to be fastened directly to the panels without damaging the tubes. Interior walls **8** can cross the grooves without bearing on and therefore without damaging the tubes. The clear visibility of the tubing paths allows for walls or finish floor materials to be fastened to the subfloor membrane with nails **9,** without damage to the tubes.

If repairs become necessary, the same visibility that makes punctures unlikely will make leaks easy to locate. Only that part of the finish floor covering over the defect would have to be removed rather than removing whole sections of the subfloor.

The heat conductive surface is in direct contact with the floor covering such as for example carpet, hardwood floor or tile. The thermal impedance provided by the finish floor covering slows down heat dissipation from the surface sufficiently to reduce the heat gradient between adjacent hydronic tube elements.

In existing hydronic systems the warm up time or thermal lag is governed by the thermal mass and/or resistance of the concrete slab or the plywood subfloor. This can be many hours or even days in existing systems. In the subject invention, low mass plus low resistance permits a change of surface temperature to become measurable in minutes.

Fig. 2 is a top view of a typical array of heating panels which shows an example of how hydronic tubing is placed in an array. The hot water input **5** is routed along the grooves **10** tangential to the arcs of end section panels **2.** Then it is routed to a 90 degree curved groove **11.** It is then routed as shown in Fig. 2 through end panels **2** turning 180 degrees **12** typically at each end panel, and through straight panels **3** finally turning in a 90 degree groove **11** to the output **6** thereby completing a circuit.

Fig. 3 is a top view of an end section panel utilizing three longitudinal grooves per panel. The size and aspect ratio is typical of subfloor panels currently in use. The spacing between the centers of three grooves **13, 14, 15** is one third of the width of the panel. The centers of grooves **13** and **15** are spaced one sixth of the width of the panel **2** from the long edge of the panel **2.** On one end of the panel **2** the ends of grooves **13, 14** and **15** are Terminated by semi circular arc grooves **12.** In addition, grooves **13, 15** connect to quarter arc circular grooves **11.** Lastly a straight groove **10** is placed tangential and connecting to arcs **11** and **12**. The center of this tangential groove is spaced the same distance from the short edge of a panel as grooves **13** and **15** are spaced from long edge.

This spacing, which is based on three primary tubing paths per panel, is optimum for typical construction in the U.S. based on English units of measure. It allows for the erection of exterior walls of conventional thickness while providing sufficient space between the interior surface of an exterior wall and the nearest tubing path for attachment of carpet tack strips. Nonetheless, it may be advantageous to manufacture panels with one, two, four, five or six tube modules per sheet of subfloor, but still in accord generally with the geometry and modularity depicted herein. These units may be selected where, for example, ease of carpet installation is less important than various other considerations such as surface temperature and tubing density. Where metric based lumber and subflooring materials are used, the exact spacing may need to be modified based on the metric sizing of conventional construction materials, but still in accord with the geometry and modularity depicted herein.

Fig. 4 is a top view of a straight section panel utilizing three longitudinal grooves per panel. The spacing between the centers of the three grooves **16, 17, 18** is one third of the width of the panel **3.** The centers of grooves **16** and **18** are spaced one sixth of the width of the panel from the long edge of the panel **3.** The variations arising from differing numbers of tubing pathways per panel or metric units of measure envisioned in the description of the panels in Fig. 3 apply to these straight run panels as well.

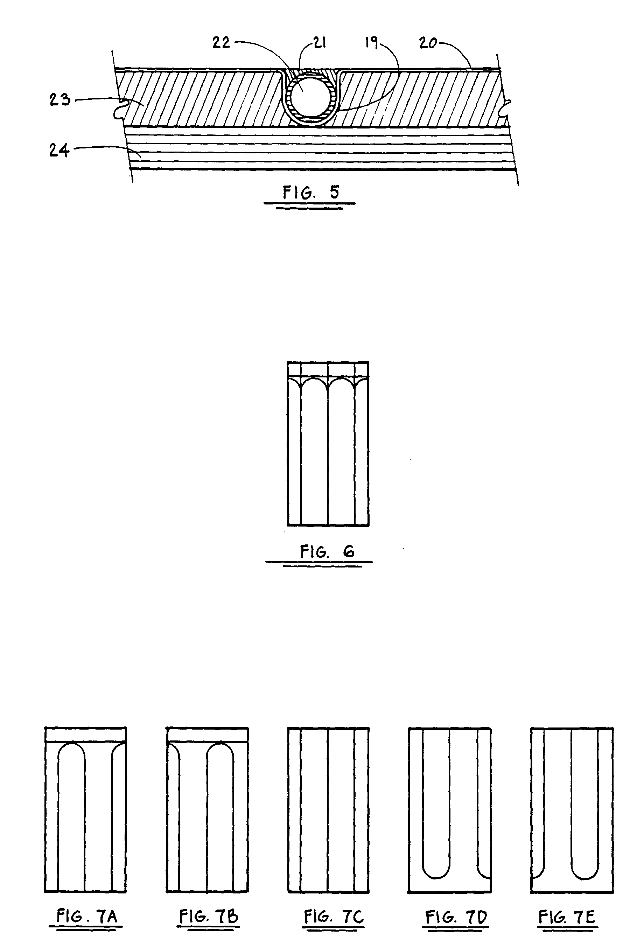

Fig. 5 is a cross section view applicable to all panels depicted herein. A groove **19** is formed in a sub-floor panel. In one embodiment, panels may be manufactured of a homogenous material such as plywood or oriented strand board. In that embodiment, the layer of a panel **23** in which the groove is formed is structurally compromised by the groove and therefore the remaining layer **24** which is ungrooved must have sufficient structural characteristics to span the typical spacing of floor joists **1** found in standard construction. Alternatively, the most cost effective embodiment of this invention may be a hybrid panel with a layer **23** of a material such as chip board or particle board whose primary characteristics are compressive strength and a layer **24** of a material such as plywood or oriented strand board whose characteristics are optimized for structure across a span.

A heat conducting sheet **20** is pre-formed to have a contour matching the sub-floor panel topography and is then bonded to the panel. After installation of the panels in the array of FIG. 1 & 2, elastomer **21** is placed into groove **19.** Then the hydronic tubing **22** is pushed tightly into the bottom of the elastomer lined groove **19** to make good thermal contact with the heat conducting surface **20.** Any elastomer **21** not filling voids between the heat conductive surface of groove **19** and the hydronic tubing **22** will be squeezed to the top of the hydronic tubing **22.** This excess is then trowelled flush with the top surface of the panel. This provides a flat surface on which floor covering can be installed directly.

The elastomer **21** serves three functions. It improves the heat transfer between the hydronic tubing **5** and the conductive surface **20** by reducing or eliminating air filled voids. It provides a smooth surface and support for pliable floor coverings such as carpet, linoleum or tile. It holds the tubing in place. In the case of a rigid floor covering such as hardwood, a tight press fit between the hydronic tubing **22** and the heat conductive lined groove **19** may permit complete omission of the elastomer **21** and may be the economically most attractive construction method.

The two panel types depicted in Figs. 3&4 are sufficient to produce all of the desired benefits envisioned for this invention with only occasional on site modification. However, in order to allow just two types of panels to accommodate a wide variety of panel layouts, it is obvious that in a given panel there may be arced paths **11** and **12** and tangential paths **10** that are not utilized in a given panel. Eliminating these unused paths by disaggregating the basic geometry of the system into a number of differentiated panels might reduce some of the costs of manufacture and installation with the trade off that more types of panels may be required thereby increasing the tooling and inventory costs associated with this invention. Figs. 7a, 7b, 7c, 7d, 7e depict an example of a system of panels which is a disaggregation of the geometries of panels **2** and **3.**

Alternatively, cost savings due to simplified manufacturing and stocking requirements, may override any need to reduce the number of unused paths and may, to the contrary, dictate that a single panel which aggregates the geometry of the panels depicted in Figs. 3&4 will be most cost effective. Fig. 6 is an example of single panel which is an aggregation of the geometries of panels **2** and **3** into a single panel.

The invention has other potential applications and those skilled in the art can find other fields of use. The present invention may be utilized as a wall panel or ceiling panel which can be easily be made smooth in a manner typical of Gypsum Board surfaces. Instead of heating, the invention could be used for cooling by circulating a cooling liquid. In another example electric panel heating may use a similar modular panel with smaller grooves to receive the smaller diameter wires typical of these systems. Electric cooling could be accomplished by using coulomb cooling. There may be other electronic or thermodynamic applications where standardized modular panels can facilitate the easy assembly of arrays of wires, tubes or fibers as part of a conductive surface.

## Claims

1. A thermal transfer system for a building story comprising,
a plurality of load-bearing panels (2,3), each panel composed of a structural material (23, 24) which can be sawn, nailed, screwed, or glued, each of the load-bearing panels (2, 3) having a grooved surface (12, 13) to which a heat conducting layer (20) is adhered to form a thermally conductive surface and which substantially conforms to said grooved surface (12, 13),
said grooved surface (12, 13) of each of said load bearing panels (2, 3) positioned to abut said grooved surface of an adjacent load bearing panel,
the plurality of load-bearing panels being positioned together to form a subfloor that is substantially continuous for the story, and directly secured to joists, and the thermally conductive surfaces (20) of the secured load-bearing panels provide a continuous pathway of grooves substantially throughout the subfloor,
said grooves opened at a top surface of the subfloor, for incorporating a thermal exchange means (4, 22) to form a substantially continuous, substantially planar, thermally conductive surface over substantially all of the subfloor.

2. The thermal transfer system of claim 1, wherein the thermal exchange means (4, 22) is used for heating a room in contact with the thermal transfer system.

3. The thermal transfer system of claim 1, wherein the thermal exchange means comprises tubing (4, 22) for carrying a thermal exchange medium throughout the plurality of load bearing panels (2, 3).

4. The thermal transfer system of claim 1, wherein the grooves (12, 13) of the load bearing panels (2, 3) are aggregated into a single load bearing panel.

5. The thermal transfer system of claim 1, wherein the plurality of load-bearing panels comprises pluralities of first and second rectangular load-bearing panels, the grooved surface of each of the first rectangular load-bearing panels comprising a plurality of substantially parallel and evenly spaced grooves (13, 14, 15) extending between opposite edges of the first rectangular load-bearing panel and the grooved surface of each of the second rectangular load-bearing panels comprising a first plurality of substantially parallel and evenly spaced grooves extending from a first edge of the second rectangular load-bearing panel and connected through a second plurality of arced grooves (11, 12) near a second edge of the second rectangular panel opposite the first edge.

6. The thermal transfer system of claim 1, wherein said load bearing panel (2, 3) can be shaped and fastened to the joists (1) in a manner typical of standard subfloor panels used in conventional wood frame construction.

7. The thermal transfer system of claim 6, wherein a location of said thermal exchange means (4, 22) is visible throughout the top of the subfloor.

8. The thermal transfer system of claim 1, wherein said thermal exchange means is embedded in a hardening filler material (21).

9. The thermal transfer system of claim 5, wherein the plurality of load-bearing panels (2, 3) further comprises an additional groove (10) extending between edges of each second rectangular panel perpendicular to the first and second edges and tangential to the arced grooves.

10. A thermal transfer system according to claim 1,
wherein the thermal exchange means comprises wire for ohmic heating of a room in contact with the thermal transfer system.

11. A method for constructing a thermal exchange system for a building story of a structure including joists (1), from a plurality of load bearing panels (2, 3), each panel composed of a structural material which can be sawn, nailed, screwed, or glued
each of said load-bearing panels having a grooved surface (12, 13) and a thermally conducting panel surface (20) on which is formed a modular grooved pattern that substantially conforms to said grooved surface, the method comprising the steps of:
securing the plurality of load-bearing panels (2, 3) directly to the joists (1) to form a subfloor that is substantially continuous for the story wherein the modular grooved surface (12, 13) of the plurality of load-bearing panels forms a continuous network of grooves substantially throughout a top surface of the subfloor: and
depositing a thermal exchange means (4, 22) in the network of grooves after forming said subfloor and prior to and independent of erecting walls or partitions.

12. The method of claim 11, further comprising the step of:
depositing a hardening filler material (21) in the network of grooves (12,13) after forming said subfloor and prior to and independent of erecting walls or partitions.

13. The method of claim 12, further comprising the steps of:
smoothing the hardening filler material (21) to form a substantially planar surface with the thermally conducting panel surface; and
curing the hardening filler material (21) to form a load-bearing, thermal exchange surface in the subfloor of the story.

14. The method of claim 11, wherein the depositing step comprises the steps of:
depositing a hardening filler material (21) in the network of grooves;
embedding the thermal exchange means (4,22) in the deposited hardening filler material (21) so that the hardening filler material (21) forms a heat conducting path between the thermal exchange means (4,22) and the plurality of load bearing panels (2,3); and
depositing additional hardening filler material (21) over the thermal exchange means.

15. The method of claim 14, wherein the step of depositing a hardening filler material comprises the steps of:
selecting the hardening filler material (21) that is visually distinguishable from the conducting panel surface when cured for identifying the locations of the thermal transfer means; and
depositing the selected hardening filler material (21) in the network of grooves (12,13).

16. The method of claim 11, wherein said load bearing panel can be shaped and fastened to the joists in a manner typical of standard subfloor panels used in conventional wood frame construction.

17. The method of claim 16, wherein a location of a said thermal exchange means is visible throughout the top of the subfloor.

## Patentansprüche

**1.** Ein thermisches Übertragungs System für Fußboden bestehend aus einer Vielheit trägender Platten (2, 3), jede Platte zusammengesetzt von tragfähigen Material (23, 24) das man sägen, nageln, schrauben oder leimen kann, die tragenden Platten (2, 3) haben eine gerillte Oberfläche(12, 13) zu der eine thermisch leitfähige Schicht (20) gehafted ist um eine thermisch leitfähig Oberfläche zu gestalten das ist wesentlich angepasst zu der gerillten Oberfläche (12, 13), die gerillte Oberfläche jeder tragender Platte (2, 3) ist gelegt um die gerillten Oberfläche der angrenzende trägende Platte anzupassen, eine Vielfalt der trägenden Platten ist zusammengelegt um den Rohboden zu bauen, der wesentlich ununterbrochen ist für den Fußboden und ist gehafted unmittelbar zu den Balken (1) und die thermisch leitfähige Schicht (20) wesentlich versorgt die zusammen gehaftende trägende Platten mit ununterbrochen Pfaden der Rillen über den ganzen Rohboden, diese Rillen sind offen an der Oberfläche des Rohbodens um thermische Auswechsel Mittel (4, 22) zu benutzen und wesentlich eine ununterbrochene planar, thermische leitfähige Oberfläche zu gestalten für wesentlich den ganzen Rohboden.

**2.** Das thermisches Übertragungs System von Anspruch 1, wo das thermische Umtausch Mittel (4 12) ist gebraucht um ein Zimmer zu heizen im Kontakt mit dem thermischen Übertragungs System.

**3.** Das thermisches Übertragungs System von Anspruch 1 wo das thermische Umtausch Mittel gesteht aus Scläuchen (4,22) zur Führung des thermischen Auswechselmittels durch die Pluralität der tragenden Platten.

**4.** Das thermisches Übertragungs System von Anspruch 1 wo die Rillen (12, 13) der trägenden Platten (2, 3) angehäufed sind in eine einzelne trägende Platte.

**5.** Das thermisches Übertragungs System von Anspruch 1 wo eine Vielfalt der trägenden Platten besteht aus einer Vielfalt der ersten und zweiten viereckig trägenden Platten, die gerillte Oberfläche der ersten viereckig tragende Platte bestehend aus einer ersten Vielfalt der wesentlich parallel und gleichmäßigen Abstände der Rillen (13, 14, 15) und das ist gespannt zwischen entgegend gesetzten Seiten der ersten viereckigen trägenden Platte und der gerillten Oberfläche der jeden zweiten viereckigen tragenden Platten bestehend aus einer ersten Vielheit der Rillen die wesentlich parallel sind und wesentlich einen gleichmäßigen Abstand haben und reichen von der ersten Seite zu der zweiten viereckig tragenende Platte und sind angeschloßen durch eine zweite Vielfalt gebogener Rillen (11, 12) nählich der zweiten Seite der zweiten Platte entgegen der ersten Seite.

**6.** Das thermisches Übertragungs System von Anspruch 1 wo die trägende Platte (2, 3) bearbeited und gefestigt ist zu den Balken (1) typisch für normale Rohdeck Platten im Gebrauch für die herkömmliche Gerippebauweise.

**7.** Das thermisches Übertragungs System von Anspruch 6 wo die Position des thermischen Austausch Mittels (4, 22) kann an der ganzen Oberfläche des Rohbodens gesehen sein.

**8.** Das thermisches Übertragungs System von Anspruch 1 wo das beziehende thermische Austausch Mittel in einem verhärtenden Füllstoff (21) eingelassen ist.

**9.** Das thermisches Übertragungs System von Anspruch 5 wo die Vielheit der tragenden Platten (2, 3) hat eine zusetzliche Rille (10) zwischen jeder zweiten viereckigen Platte Seiten senkrecht zu den ersten und zweiten Seiten tangential zu den gebogenen Rillen.

**10.** Das thermische Übertragungs System von Anspruch 1 wo das thermische Austausch Mittel ist Draht für Ohmisches Heizen des Raums in Verbindung mit dem thermischen Austausch System.

**11.** Eine Methode ein thermisches Austausch System für ein Bauwerk Geschoß zu gebauen einschlüßlich Balken (1) mit einer Vielheit der tragenden Platten (2, 3) jede Platte ist von einem tragfähigen Material gemacht das man sägen, nageln, schrauben und leimen kann, und jede tragfährige Platte hat eine gerillte Oberfläche (12, 13) und eine thermische leitende Oberfläche (20) mit einem modularen Rillen Muster das mit der gerillten Oberfläche wesentlich angepaßt ist. Die Methode besteht aus den folgenden Stritten: Die Vielfalt der tragenden Platten (2, 3) ist direkt zu den Balken (1) gefestigt um einen Rohboden zu bilden der ist wesentlich ununterbrochen für das Geschoß wo die modularische rilled Oberflächen(12, 13) die Vielfalt der tragenden Platten ein ununterbrochenes Netz der Rillen bilds wesentlich durchaus die Oberfläche des Rohbodens und thermische Austauschmittel (4, 22) in das Netz der Rillen einzustellen nach der Rohboden gefertigt ist und unabhändig und bevor die Wände oder Trennwände errichtet sind.

**12.** Die Methode des Anspruch 11 weiter bestehend aus erhärtenden Füllstoff(21) in das Nest der Rillen (12, 13) einzulegen nach der Rohboden gefertigt ist und unabhändig und bevor die Wände oder Trennwände errichtet sind.

**13.** Die Methode des Anspruch 11, weiter bestehend den erhärtenden Füllstoff (21) glatt zu machen um eine Oberfläche wesentlich eben mit der thermischen leitfähigen Platten Oberfläche; und den erhärtenden Füllstoff(21) zu kurieren um eine trägende thermische Austausch Oberfläche zu erreichen und den erhärtenden Füllstoff (21) zu kurieren um eine tragende thermische Austausch Oberfläche des Rohbodens des Geschloßs zu ereichen.

**14.** Die Methode des Anspruch 11 wo die Füllstoff Einlegung ist als folgend: Der erhärtende Füllstoff (21) ist in das Nest der Rillen eingelegt und das eingelegte thermische erhärtende Austauschmittel (4, 22) bildet einen thermisch geleitenden Pfad zwischen den thermischen Austauschmittel (4, 22) und der Vielfalt der tragenden Platten (2, 3) und zusätzlicher erhärtender Füllstoff(21) ist ober dem thermischen Austauschmittel eingelegt.

**15.** Die Methode des Anspruch 14 wo die Füllstoff Einlegung ist als folgend : Ein erhärtender Füllstoff (21) ist ausgewählt das ist sichtbarlich unterschieden von der leitfähigen Oberfläche wann es gehärted ist um die Position der thermischen Austauschmittel zu unterscheiden, dann der ausgewählte erhärtende Füllstoff(21) ist in das Nest der Rillen (12, 13) eingelegt.

**16.** Die Methode des Anspruch 11 wo die tragende Platte ist bearbeited und gehafted zu den Balken wie typisch für Rohboden Platten in herkömmlicher Gerippe Baukunst.

**17.** Die Methode des Anspruch 16 wo die Position der thermischen Austauschmittel ist sichtbar durch die Rohboden Oberfläche.

## Revendications

1. Système de transfert thermique pour un étage d'un bâtiment comprenant,
plusieurs panneaux (2, 3) porteurs, chaque panneau composé d'un matériau de construction (23, 24) qui peut être scié, cloué, vissé ou collé, chacun des panneaux (2, 3) porteurs ayant une surface rainurée (12, 13) à laquelle adhère une couche conductrice de la chaleur (20) pour former une surface thermiquement conductrice et qui est essentiellement identique à la dite surface rainurée (12, 13),
la dite surface rainurée (12, 13) de chaque panneau (2, 3) porteur, positionnée pour abouter la dite surface rainurée d'un panneau porteur adjacent,
les multiples panneaux porteurs étant positionnés ensemble pour former un sous-plancher qui est essentiellement continu pour l'étage, et fixé directement à des gîtes, et les surfaces thermiquement conductrices (20) des panneaux porteurs fixés assurent un trajet continu de rainures essentiellement sur toute l'étendue du sous-plancher,
les dites rainures ouvertes à une surface supérieure du sous-plancher, pour incorporer un moyen (4, 22) d'échange thermique pour former une surface thermiquement conductrice, essentiellement continue, essentiellement plane, essentiellement sur toute l'étendue du sous-plancher.

2. Système de transfert thermique de la revendication 1, dans lequel le moyen d'échange thermique (4, 22) est utilisé pour chauffer une pièce en contact avec le système de transfert thermique.

3. Système de transfert thermique de la revendication 1, dans lequel le moyen d'échange thermique comprend une tuyauterie (4, 22) pour transporter un agent d'échange thermique sur l'étendue des multiples panneaux (2, 3) porteurs.

4. Système de transfert thermique de la revendication 1, dans lequel les rainures (12, 13) des panneaux (2, 3) porteurs sont regroupées en un panneau porteur unique.

5. Système de transfert thermique de la revendication 1, dans lequel les multiples panneaux porteurs comprennent plusieurs premiers et seconds panneaux porteurs rectangulaires, la surface rainurée de chacun des premiers panneaux porteurs rectangulaires comprenant plusieurs rainures (13, 14, 15) essentiellement parallèles et espacées régulièrement, s'étendant entre les bords opposés du premier panneau porteur rectangulaire, et la surface rainurée de chacun des seconds panneaux porteurs rectangulaires comprenant un premier nombre de rainures essentiellement parallèles et espacées régulièrement, s'étendant depuis un premier bord du second panneau porteur rectangulaire, et reliées par un second nombre de rainures courbées (11, 12) près d'un second bord du second panneau rectangulaire opposé au premier bord.

6. Système de transfert thermique de la revendication 1, dans lequel le dit panneau (2, 3) porteur peut être façonné et fixé aux gîtes (1) d'une manière typique pour des panneaux de sous-plancher standard utilisés dans une construction conventionnelle à structure en bois.

7. Système de transfert thermique de la revendication 6, dans lequel un emplacement dudit moyen (4, 22) d'échange thermique est visible à travers le dessus du sous-plancher.

8. Système de transfert thermique de la revendication 1, dans lequel le dit moyen d'échange thermique est noyé dans un matériau (21) de remplissage qui durcit.

9. Système de transfert thermique de la revendication 5, dans lequel les multiples panneaux (2, 3) porteurs comprennent en outre une rainure additionnelle (10) s'étendant entre des bords de chaque second panneau rectangulaire, perpendiculairement aux premier et second bords, et tangentiellement aux rainures courbées.

10. Système de transfert thermique selon la revendication 1, dans lequel le moyen d'échange thermique comprend un fil pour le chauffage ohmique d'une pièce en contact avec le système de transfert thermique.

11. Procédé pour construire un système d'échange thermique pour un étage d'un bâtiment d'une structure comprenant des gîtes (1), à partir de plusieurs panneaux (2, 3) porteurs, chaque panneau composé d'un matériau de construction qui peut être scié, cloué, vissé ou collé,
chacun desdits panneaux porteurs ayant une surface (12, 13) rainurée et une surface de panneau (20) thermiquement conductrice sur laquelle est formé un motif rainuré modulaire qui est essentiellement identique à la dite surface rainurée, le procédé comprenant les étapes consistant à:
fixer les multiples panneaux (2, 3) porteurs directement aux gîtes (1) pour former un sous-plancher qui est essentiellement continu pour l'étag dans lequel la surface rainurée modulaire (12, 13) des multiples panneaux porteurs forme un réseau continu de rainures essentiellement sur toute une surface supérieure du sous-plancher, et
poser un moyen (4, 22) d'échange thermique dans le réseau de rainures après avoir formé le dit sous-plancher et avant, et indépendamment de l'érection de murs ou de séparations.

12. Procédé de la revendication 11, comprenant en outre les étapes consistant à:
poser un matériau (21) de remplissage qui durcit dans le réseau de rainures (12, 13), après avoir formé le dit sous-plancher et avant, et indépendamment de l'érection de murs ou de séparations.

13. Procédé de la revendication 12, comprenant en outre les étapes consistant à:
lisser le matériau (21) de remplissage qui durcit pour former une surface essentiellement plane avec la surface du panneau thermiquement conducteur; et
durcir le matériau (21) de remplissage qui durcit pour former une surface portante à échange thermique dans le sous-plancher de l'étage.

14. Procédé de la revendication 11, dans lequel l'étape de pose comprend les étapes consistant à:
poser un matériau (21) de remplissage qui durcit dans le réseau de rainures;
noyer le moyen (4, 22) d'échange thermique dans le matériau (21) de remplissage qui durcit, posé, de sorte que le matériau (21) de remplissage qui durcit forme un trajet de conduction de la chaleur entre le moyen (4, 22) d'échange thermique et les multiples panneaux (2, 3) porteurs; et
poser un matériau (21) de remplissage qui durcit, additionnel, sur le moyen d'échange thermique.

15. Procédé de la revendication 14, dans lequel l'étape de pose d'un matériau de remplissage qui durcit comprend les étapes consistant à:
sélectionner le matériau (21) de remplissage qui durcit, qui peut être visuellement distingué de la surface du panneau conducteur lorsqu'il est durci, pour identifier les emplacements du moyen de transfert thermique; et
poser le matériau (21) de remplissage qui durcit, sélectionné, dans le réseau de rainures (12, 13).

16. Procédé de la revendication 11, dans lequel le dit panneau porteur peut être façonné et fixé aux gîtes d'une manière typique pour des panneaux de sous-plancher standard utilisés dans une construction conventionnelle à structure en bois.

17. Procédé de la revendication 16, dans lequel un emplacement dudit moyen d'échange thermique est visible à travers le dessus du sous-plancher.
